# EUROPÄISCHE PATENTSCHRIFT

(11) **EP 3 513 048 B1**
(45) Veröffentlichungstag und Bekanntmachung des Hinweises auf die Patenterteilung: **16.06.2021**
(21) Anmeldenummer: 17768100.4
(22) Anmeldetag: 13.09.2017
(51) Int. Cl.: F01N 13/18, F16F 1/373, B60K 13/04

(54) **ELASTOMERLAGER FÜR EINE AUSPUFFAUFHÄNGUNG**
ELASTOMER BEARING FOR AN EXHAUST SUSPENSION
BLOC EN ÉLASTOMÈRE POUR SUSPENSION D'ÉCHAPPEMENT

(30) Priorität: 14.09.2016 DE 102016117315
(43) Veröffentlichungstag der Anmeldung: 24.07.2019
(73) Patentinhaber: Vibracoustic SE, 64293 Darmstadt (DE)
(72) Erfinder: HADJI, Mohamed, 68400 Riedisheim (DE); TENAILLEAU, Alexandre, 44230 Saint-Sébastien-sur-Loire (FR); GAWRONSKI, Didier, 44470 Thouaré sur Loire (FR)
(74) Vertreter: Patentanwälte Olbricht Buchhold Keulertz
(86) Internationale Anmeldenummer: PCT/EP2017/073066
(87) Internationale Veröffentlichungsnummer: WO 2018/050723

(56) Entgegenhaltungen:
- DE-A1-102013 224 562
- DE-B3-102014 005 286
- DE-T2-602006 000 165
- DE-T5-112006 002 536
- FR-A3- 3 021 258
- KR-A- 20120 136 947
- KR-A- 20140 131 486

## Beschreibung

Die vorliegende Erfindung betrifft ein Elastomerlager für eine Auspuffaufhängung, umfassend einen Elastomerkörper, der einen Aufnahmebereich für eine Halteeinrichtung und eine Öffnung zum Lagern eines Auspuffhakens aufweist, wobei der Elastomerkörper an dem Aufnahmebereich eine Rasteinrichtung zum Befestigen der Halteeinrichtung auf dem Elastomerkörper aufweist.

Auspuffaufhängungen mit Elastomerlagern werden in Kraftfahrzeugen eingesetzt, um das Gewicht der Auspuffanlage zu lagern und auftretende Schwingungen zwischen dem Auspuff und der Karosserie zu isolieren und zu dämpfen.

Ein derartiges Elastomerlager für eine Auspuffaufhängung ist beispielsweise aus KR 10-2014-0131486 A bekannt. Das Elastomerlager weist einen Elastomerkörper mit einem Aufnahmebereich für eine Befestigungsvorrichtung auf. Die Befestigungsvorrichtung kann mittels einer Schnappverbindung an dem Elastomerkörper befestigt werden.

DE 11 2006 002 536 T5 offenbart ein Elastomerlager für eine Auspuffaufhängung mit einem S-förmigen Elastomerkörper, der aufgrund seiner Form zwei überlappende Hohlräume bildet. An dem Elastomerkörper sind zwei Öffnungen zur Aufnahme eines ersten Aufhängestiftes zur Befestigung an dem Auspuff und eines zweiten Aufnahmestiftes zur Befestigung an der Karosserie vorgesehen.

Weitere Elastomerlager für Auspuffaufhängungen sind beispielsweise aus KR 10-2012-0136947 A, DE 10 2013 224 562 A1, DE 60 2006 000 165 T2, DE 10 2014 005 286 B3 und FR 3 021 258 A3 bekannt.

Der Erfindung liegt daher die **Aufgabe** zugrunde, ein Elastomerlager für eine Auspuffaushängung derart weiterzubilden, dass die auftretenden Schwingungen des Auspuffes in allen Richtungen gut isoliert werden und eine geringe dynamische Steifigkeit vorliegt.

Zur **Lösung** der Aufgabe wird bei einem Elastomerlager der eingangs genannten Art vorgeschlagen, dass der Elastomerkörper einen hohlzylinderförmigen Innenabschnitt, einen hohlzylinderförmigen Außenabschnitt und einen U-förmigen Verbindungsabschnitt aufweist, der einen ersten Verbindungsbereich und einen zweiten Verbindungsbereich aufweist, wobei der Innenabschnitt radial innerhalb des Außenabschnitts angeordnet ist und durch den Verbindungsabschnitt mit dem Außenabschnitt verbunden ist, wobei der erste Verbindungsabschnitt mit dem Innenabschnitt und der zweite Verbindungsbereich mit dem Außenabschnitt verbunden ist.

Der Erfindung liegt die Erkenntnis zugrunde, dass durch den kaum beschränkten Bewegungsspielraum des Innenabschnittes in dem Hohlraum innerhalb des Außenabschnittes die auftretenden Schwingungen in jeder Richtung gut isoliert werden und eine niedrige dynamische Steifigkeit vorliegt. Eine derartige Ausgestaltung bietet in radialer Richtung des Elastomerlagers genügend Steifigkeit, um vergleichsweise große Lagerlasten der Auspuffaufhängung zu lagern. Eine derartige Ausgestaltung des Elastomerkörpers zeichnet sich ebenfalls durch eine besonders geringe Raumanforderung aus. Infolgedessen weist das Elastomerlager besonders gute NVH-Eigenschaften auf, wodurch der Verschleiß des Elastomerlagers verringert wird.

Zudem zeichnet sich die Rastverbindung durch eine besonders hohe Verschlusskraft aus, wodurch keine weiteren Haftmittel zum sicheren Befestigen der Halteeinrichtung auf dem Elastomerkörper notwendig sind. Dadurch können während der Herstellung weitere Kosten gespart werden. Durch das Verzichten auf einen Metalleinsatz kann das Elastomerlager nun ausschließlich aus elastomerem Material hergestellt.

In vorteilhafter Ausgestaltung ist das Elastomerlager aus Naturkautschuk, schwefelvernetztem EPDM, peroxidvernetztem EPDM oder Silikon hergestellt.

Vorteilhaft weist die Rasteinrichtung eine erste Rastlippe und eine zweite davon beabstandete Rastlippe auf, die aus einem elastomeren Material hergestellt sind und sich radial nach außen erstrecken.

Aufgrund der meist ringförmigen Form der Halteeinrichtung ist eine Rasteinrichtung mit zwei voneinander beabstandeten Rastlippen zur Aufnahme der Halteeinrichtung eine besonders einfache Ausgestaltung. Vorteilhafterweise erstrecken sich die Rastlippen mindestens so weit radial nach außen, dass bei der Befestigung der Halteeinrichtung diese vollständig in axialer Richtung aufgenommen wird. Da die Rastlippen aus einem elastomeren Material hergestellt sind, kann die Halteeinrichtung axial auf das Elastomerlager gedrückt werden, wobei eine der Rastlippen umklappt, so dass die Halteeinrichtung an dem Aufnahmebereich befestigt werden kann. Der Abstand der zwei Rastlippen voneinander entspricht in etwa der Breite der Halteeinrichtung, wodurch die umgeklappte Rastlippe nach dem Aufdrücken der Halteeinrichtung wieder nach oben klappen kann.

In vorteilhafter Ausgestaltung weist der Innenabschnitt an seinem dem Verbindungsabschnitt zugewandten Ende einen ersten Vorsprung auf.

Vorzugsweise weist der erste Vorsprung eine ringförmige oder eine hohlzylindrische Form auf.

In vorteilhafter Ausgestaltung weist der Innenabschnitt an seinem dem Verbindungsabschnitt abgewandten Ende auf der radialen Außenseite eine Aussparung auf.

Vorzugsweise weist die Aussparung eine ringförmige oder eine hohlzylindrische Form auf.

In vorteilhafter Ausgestaltung weist der Verbindungsabschnitt einen ersten Verbindungsbereich auf, der sich im Vergleich zum zweiten Verbindungsbereich zum Innenabschnitt hin verjüngt.

In vorteilhafter Ausgestaltung weist die erste Rastlippe einen sich radial nach außen erstreckenden zweiten Vorsprung auf.

Mit Hilfe des zweiten Vorsprungs wird die Bedienbarkeit des Elastomerlagers insofern verbessert, als das Befestigen und Entfernen der Halteeinrichtung auf dem Elastomerkörper vereinfacht wird.

In vorteilhafter Ausgestaltung weist der Verbindungsabschnitt an einer axial dem Innenabschnitt und dem Außenabschnitt abgewandten Seite einen radial abgeschrägten Querschnitt auf.

Wenn die Vorlast durch die Auspuffanlage antizipiert werden kann, ist es möglich, das Elastomerlager an die wirkenden Lagerlasten anzupassen. Ein Verbindungshaken der Auspuffaufhängung kann somit leicht schräg mit dem Elastomerlager verbunden werden. Eine solche Ausgestaltung weist verbesserte NVH-Eigenschaften auf, wodurch der Verschleiß des Elastomerlagers verringert wird.

In vorteilhafter Ausgestaltung ist der Elastomerkörper einteilig ausgebildet.

Da der Elastomerkörper nur aus einer Art von Material hergestellt ist, lässt er sich auch einteilig und kostengünstig herstellen. Vorteilhafterweise wird der Elastomerkörper in einem Arbeitsschritt hergestellt.

Weiterhin umfasst die Erfindung eine Halteeinrichtung für ein Elastomerlager nach den vorstehenden Ansprüchen.

Vorteilhafterweise ist die Halteeinrichtung aus Stahl, Kunststoff, verstärktem Kunststoff oder Aluminium hergestellt.

Vorteilhafterweise weist die Halteeinrichtung mindestens eine Öffnung zur Aufnahme des Elastomerlagers auf. Vorteilhafterweise entspricht die Größe der Öffnung zur Aufnahme des Elastomerlagers dem Außendurchmesser des Außenabschnitts.

Vorteilhafterweise weist die Halteeinrichtung eine Breite auf, die maximal dem Abstand der ersten Rastlippe zur zweiten Rastlippe entspricht.

Nachfolgend werden weitere Ausführungsformen des erfindungsgemäßen Elastomerlagers anhand der beigefügten Zeichnungen näher erläutert. Hierbei zeigen schematisch:
- Fig. 1: einen Vertikalschnitt durch ein erstes Ausführungsbeispiel eines erfindungsgemäßen Elastomerlagers mit einer darauf befestigten Halteeinrichtung;
- Fig. 2: eine perspektivische Ansicht des in Fig. 1 dargestellten Elastomerlagers und der Halteeinrichtung;
- Fig. 3: einen Vertikalschnitt durch ein zweites Ausführungsbeispiel eines erfindungsgemäßen Elastomerlagers mit einer darauf befestigten Halteeinrichtung;
- Fig. 4: eine perspektivische Ansicht des Elastomerlagers und der Halteeinrichtung aus Fig. 3;
- Fig. 5: einen Vertikalschnitt des erfindungsgemäßen Elastomerlagers mit einer darauf befestigen Halteeinrichtung und einem darin gelagerten Auspuffhaken; und
- Fig. 6: eine perspektivische Ansicht zweier erfindungsgemäßer Elastomerlager mit jeweils einem darin gelagerten Auspuffhaken, wobei die Elastomerlager in einer doppelten Halteeinrichtung befestigt sind.

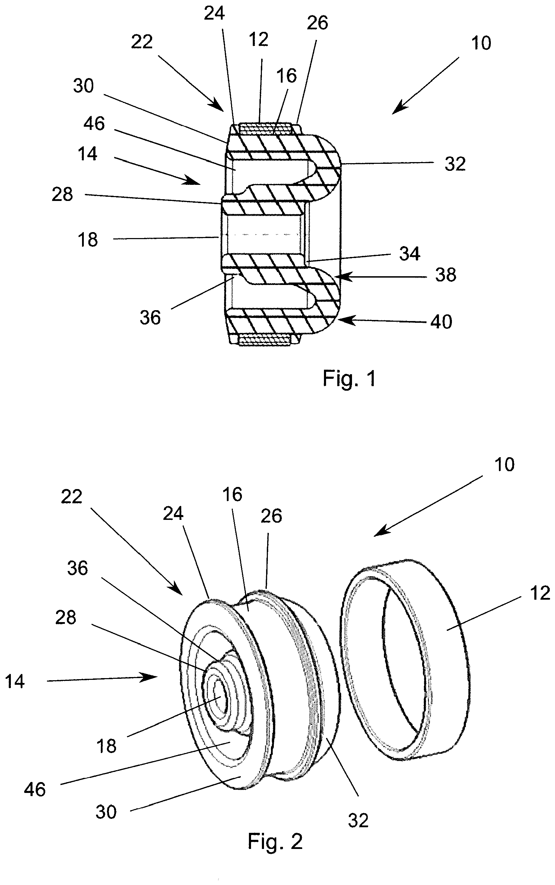

Das in den Figuren 1 und 2 dargestellte Elastomerlager 10 weist einen Elastomerkörper 14 auf, der einen Aufnahmebereich 16 für eine Halteeinrichtung 12 und eine Öffnung 18 zum Lagern eines Auspuffhakens 20 aufweist. Der Elastomerkörper 14 umfasst einen Aufnahmebereich 16 und eine Rasteinrichtung 22 zum Befestigen der Halteeinrichtung 12 auf dem Elastomerkörper 14 auf. Die Rasteinrichtung 22 hat eine erste Rastlippe 24 und zweite davon beabstandete Rastlippe 26, die sich jeweils radial nach außen erstrecken.

Der Elastomerkörper 14 weist einen hohlzylinderförmigen Innenabschnitt 28 und einen hohlzylinderförmigen Außenabschnitt 30 sowie einen U-förmigen Verbindungsabschnitt 32 auf, wobei der Innenabschnitt 28 radial innerhalb des Außenabschnitts 30 angeordnet ist und durch den Verbindungsabschnitt 32 mit dem Außenabschnitt 30 verbunden ist. An dem Innenabschnitt 28 ist an seinem dem Verbindungsabschnitt zugewandten Ende ein ringförmiger erster Vorsprung 34 vorgesehen. Der Innenabschnitt 28 umfasst an seinem dem Verbindungsabschnitt 32 abgewandten Enden auf der radialen Außenseite eine ringförmige Aussparung 36 auf. Der Verbindungsabschnitt 32 hat einen ersten Verbindungsbereich 38 auf, der mit dem Innenabschnitt 28 verbunden ist und einen zweiten Verbindungsbereich 40 auf, der mit dem Außenabschnitt 30 verbunden ist, wobei sich der erste Verbindungsbereich 38 im Vergleich zum zweiten Verbindungsbereich 40 zum Innenabschnitt 28 hin verjüngt. Das Elastomerlager ist einteilig aus einem elastomeren Material hergestellt.

Die Halteeinrichtung 12 weist eine ringförmige Form auf, wobei die Ringöffnung 44 des Rings zur Aufnahme des Elastomerlagers dient. Der Durchmesser der Ringöffnung 44 entspricht in etwa dem Außendurchmesser des Außenabschnitts 30. Somit kann eine besonders gute Rastverbindung sicher hergestellt werden. Die Halteeinrichtung 12 ist aus einem vergleichsweise harten Material hergestellt, vorzugsweise Stahl, Kunststoff, versteiftes Kunststoff oder Aluminium.

Zum Befestigen der Halteeinrichtung 12 auf dem Elastomerkörper 14 wird die Halteeinrichtung 12 axial auf das Elastomerlager 10 zubewegt. Da der Durchmesser der Ringöffnung 44 in etwa dem Außendurchmesser des Außenabschnitts 30 entspricht, kann die Halteeinrichtung über den Verbindungsabschnitt 32 gestülpt werden, bis er an die zweite Rastlippe 26 stößt. Die Halteeinrichtung 12 ist aus einem härteren Material hergestellt als die zweite Rastlippe 26. Durch Aufwenden von axialem Druck auf die Halteeinrichtung 12 in Richtung der zweiten Rastlippe 26 wird diese in Richtung der ersten Rastlippe 24 umgeklappt, und die Halteeinrichtung 12 kann über die zweite Rastlippe 26 hinweg in Richtung der ersten Rastlippe 24 bewegt werden bis die Halteeinrichtung 12 an der ersten Rastlippe 24 anschlägt. Nachdem die Breite der Halteeinrichtung 12 maximal dem Abstand der ersten Rastlippe 24 und der zweiten Rastlippe 26 entspricht, kann die zweite Rastlippe 26, normalerweise wieder in ihre Ausgangslage zurückklappen sobald die Halteeinrichtung 12 die erste Rastlippe 24 berührt. Sollte dies nicht der Fall sein, kann sich die erste Rastlippe 24 durch weiteren axialen Druck auf die Halteeinrichtung 12 geringfügig verbiegen, sodass ein Einrasten der Halteeinrichtung 12 in der Rasteinrichtung 22 durchgeführt werden kann. Die Halteeinrichtung 12 kann dann nur durch Aufwenden von großen axialen Kräften von dem Elastomerlager 10 entfernt werden.

In die Öffnung 18 des Elastomerlagers 10 kann nun ein Auspuffhaken 20 eingeführt werden, wodurch das Elastomerlager 10 den Auspuff in Bezug auf die Halteeinrichtung 12 lagert, die mit der Karosserie eines Fahrzeugs verbunden ist. Das Elastomerlager 10 kann nun durch die Ausgestaltung mit dem Außenabschnitt 30, dem Innenabschnitt 28, dem Verbindungsabschnitt 32, dem ringförmigen ersten Vorsprung 34 und der ringförmigen Aussparung 36 sowohl das Gewicht der Auspuffanlage aufnehmen als auch auf das Elastomerlager wirkende Schwingungen isolieren, wodurch die NVH-Eigenschaften der Auspuffaufhängung verbessert werden.

Die von der Halteeinrichtung 12 auf das Elastomerlager 10 übertragenen Schwingungen können durch den kaum beschränkten Bewegungsspielraum des Innenabschnitt 28 in dem Hohlraum 46 innerhalb des Außenabschnitts 30 in jeder Richtung isoliert werden.

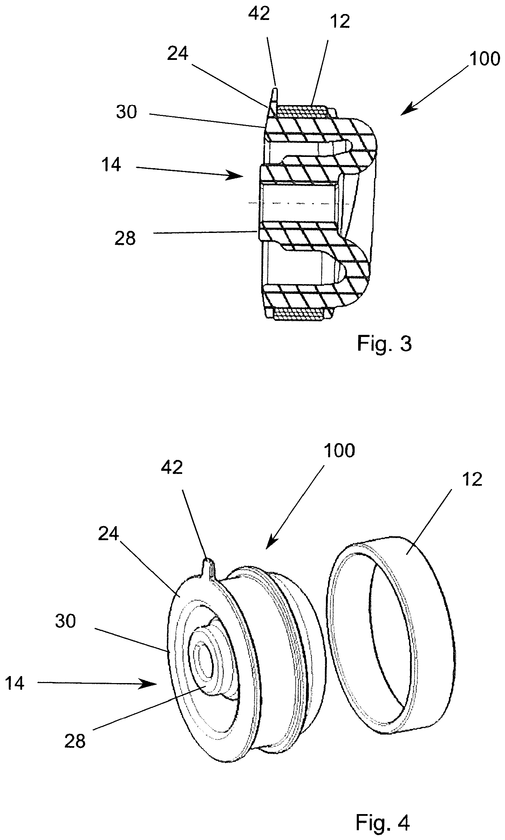

Eine weitere Ausführungsform eines Elastomerlagers 100 wird in den Figuren 3 und 4 dargestellt. Teile, die mit den gleichen Bezugszeichen versehen sind, entsprechen den Teilen der ersten Ausführungsform und werden aus Gründen der Einfachheit nicht nochmals beschrieben. Das dargestellte Elastomerlager 100 weist auf der ersten Rastlippe 24 einen sich radial nach außen erstreckenden zweiten Vorsprung 42 auf. Der zweite Vorsprung 42 erleichtert die Bedienbarkeit während des Befestigens der Halteeinrichtung 12 auf dem Elastomerkörper 14. Des Weiteren unterscheidet sich das Elastomerlager 100 von dem Elastomerlager 10 in dem axial abgeschrägten Querschnitt auf der dem Innenabschnitt 28 und dem Außenabschnitt 30 abgewandten Seite. Des Weiteren ist der Innenabschnitt 28 nicht mehr zentral im Außenabschnitt 30 angeordnet, sondern leicht nach oben verschoben. Somit wird besser auf eine bereits antizipierte Vorlast durch die Auspuffaufhängung reagiert und die Charaktereigenschaften des Elastomerlagers 100 verbessert.

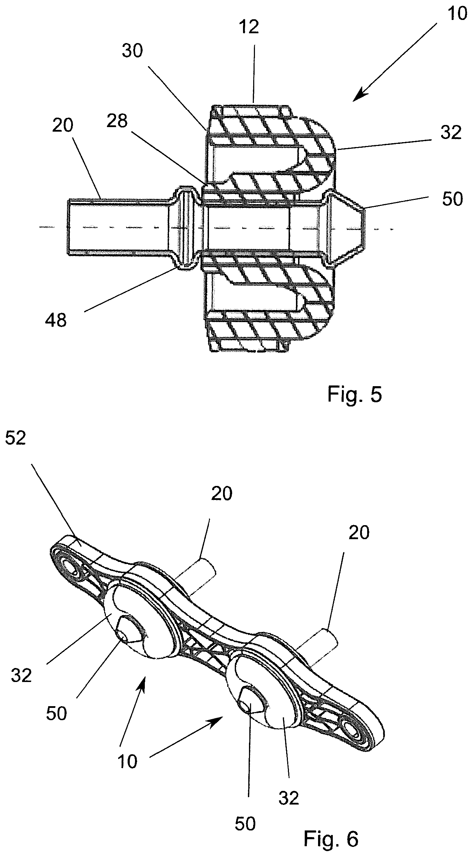

Fig. 5 zeigt einen Auspuffhaken 20, der in dem Innenabschnitt 28 des Elastomerlagers 10 gelagert wird. Der Auspuffhaken weist einen Durchmesser auf der maximal dem Innendurchmesser des Innenabschnitts 28 entspricht. Der Auspuffhaken 20 weist eine Verdickung 48 und ein Endstück 50 auf, die ein Verschieben des Elastomerlagers auf dem Auspuffhaken 20 verhindern. Dabei hat die Verdickung 48 Kontakt mit dem Innenabschnitt 28. Das Endstück 50 kontaktiert den Innenabschnitt 28 nicht und lässt auch dem Verbindungsabschnitt 32 genügend Platz sich entsprechend der von der Halteeinrichtung 12 aufgenommenen Schwingungen frei zu bewegen.

Fig. 6 zeigt eine weitere Ausführungsform der Halteeinrichtung 12. Die doppelte Halteeinrichtung 52 umfasst Ringöffnungen 44 zur jeweiligen Aufnahme eines Elastomerlagers 10. Über die Auspuffhaken 20, die jeweils in dem Elastomerlager 10 gelagert sind, ist die Auspuffeinrichtung (nicht gezeigt) mit der Karosserie (nicht gezeigt) eines Kraftfahrzeugs verbunden.

### Bezugszeichenliste

- 10, 100: Elastomerlager
- 12, 52: Halteeinrichtung
- 14: Elastomerkörper
- 16: Aufnahmebereich
- 18: Öffnung
- 20: Auspuffhaken
- 22: Rasteinrichtung
- 24: erste Rastlippe
- 26: zweite Rastlippe
- 28: Innenabschnitt
- 30: Außenabschnitt
- 32: Verbindungsabschnitt
- 34: erster Vorsprung
- 36: Aussparung
- 38: erster Verbindungsbereich
- 40: zweiter Verbindungsbereich
- 42: zweiter Vorsprung
- 44: Ringöffnung
- 46: Hohlraum
- 48: Verdickung
- 50: Endstück

## Patentansprüche

1. Elastomerlager (10, 100) für eine Auspuffaufhängung, umfassend einen Elastomerkörper (14), der einen Aufnahmebereich (16) für eine Halteeinrichtung (12) und eine Öffnung (18) zum Lagern eines Auspuffhakens (20) aufweist, wobei der Elastomerkörper (14) an dem Aufnahmebereich (16) eine Rasteinrichtung (22) zum Befestigen der Halteeinrichtung (12) auf dem Elastomerkörper (14) aufweist, wobei der Elastomerkörper (14) einen hohlzylinderförmigen Innenabschnitt (28), einen hohlzylinderförmigen Außenabschnitt (30) und einen Verbindungsabschnitt (32), der einen ersten Verbindungsbereich (38) und einen zweiten Verbindungsbereich (40) aufweist, umfasst, wobei der Innenabschnitt (28) radial innerhalb des Außenabschnitts (30) angeordnet ist, der erste Verbindungsbereich (38) mit dem Innenabschnitt (28) verbunden ist und der zweite Verbindungsbereich (40) mit dem Außenabschnitt (30) verbunden ist, **dadurch gekennzeichnet, dass** der Verbindungsabschnitt (32) U-förmig gestaltet ist

2. Elastomerlager (10, 100) nach Anspruch 1, **dadurch gekennzeichnet, dass** die Rasteinrichtung (22) eine erste Rastlippe (24) und eine zweite davon beabstandete Rastlippe (26) umfasst, die aus einem elastomeren Material hergestellt sind und sich radial nach außen erstrecken.

3. Elastomerlager (10, 100) nach Anspruch 1 oder 2, **dadurch gekennzeichnet, dass** der Innenabschnitt (28) an seinem dem Verbindungsabschnitt (32) zugewandten Ende einen ersten Vorsprung (34) aufweist.

4. Elastomerlager (10, 100) nach einem der vorhergehenden Ansprüche, **dadurch gekennzeichnet, dass** der Innenabschnitt (28) an seinem dem Verbindungsabschnitt (32) abgewandten Ende auf der radialen Außenseite eine Aussparung (36) aufweist.

5. Elastomerlager (10, 100) nach einem der vorhergehenden Ansprüche, **dadurch gekennzeichnet, dass** sich der erste Verbindungsbereich (38) im Vergleich zum zweiten Verbindungsbereich (40) zum Innenabschnitt (28) hin verjüngt.

6. Elastomerlager (10, 100) nach Anspruch 2 oder einem der vorhergehenden Ansprüche in Kombination mit Anspruch 2, **dadurch gekennzeichnet, dass** die erste Rastlippe (24) einen sich radial nach außen erstreckenden zweiten Vorsprung (42) aufweist.

7. Elastomerlager (10, 100) nach einem der vorhergehenden Ansprüche, **dadurch gekennzeichnet, dass** der Verbindungsabschnitt (32) an einer axial dem Innenabschnitt (28) und dem Außenabschnitt (30) abgewandten Seite einen radial abgeschrägten Querschnitt aufweist.

8. Elastomerlager (10, 100) nach einem der vorhergehenden Ansprüche, **dadurch gekennzeichnet, dass** der Elastomerkörper (14) einteilig ausgebildet ist.

9. Baugruppe, umfassend ein Elastomerlager (10, 100) nach einem der Ansprüche 1 bis 8 und eine Halteeinrichtung (12, 52) für das Elastomerlager (10, 100) nach einem der Ansprüche 1 bis 8.

10. Baugruppe nach Anspruch 9, **dadurch gekennzeichnet, dass** die Halteeinrichtung (12, 52) mindestens eine Ringöffnung (44) zur Aufnahme des Elastomerlagers (10, 100) aufweist.

## Claims

1. Elastomeric bearing (10, 100) for an exhaust suspension comprising an elastomeric body (14) having a receiving area (16) for a retainer (12) and an opening (18) for supporting an exhaust hook (20), said elastomeric body (14) having a detent device (22) at said receiving area (16) for securing said retainer (12) to said elastomeric body (14), said elastomeric body (14) including a hollow cylindrical inner portion (28), a hollow cylindrical outer portion (30), and a connecting portion (32) having a first connecting area (38) and a second connecting region (40), the inner portion (28) being disposed radially inside the outer portion (30), the first connecting region (38) being connected to the inner portion (28), and the second connecting region (40) being connected to the outer portion (30), **characterized in that** the connecting portion (32) is U-shaped.

2. Elastomeric bearing (10, 100) according to claim 1, **characterized in that** the detent device (22) comprises a first detent lip (24) and a second detent lip (26) spaced apart from the first detent lip, which are made of an elastomeric material and extend radially outwardly.

3. Elastomeric bearing (10, 100) according to claim 1 or 2, **characterized in that** the inner portion (28) has a first projection (34) at its end facing the connecting portion (32).

4. Elastomeric bearing (10, 100) according to one of the preceding claims, **characterized in that** the inner section (28) has a recess (36) on the radially outer side at its end facing away from the connecting section (32).

5. Elastomeric bearing (10, 100) according to one of the preceding claims, **characterized in that** the first connecting portion (38) tapers towards the inner portion (28) in comparison to the second connecting portion (40).

6. Elastomeric bearing (10, 100) according to claim 2 or one of the preceding claims in combination with claim 2, **characterized in that** the first latching lip (24) comprises a radially outwardly extending second projection (42).

7. Elastomeric bearing (10, 100) according to one of the preceding claims, **characterized in that** the connecting section (32) has a radially beveled cross-section on a side axially facing away from the inner section (28) and the outer section (30).

8. Elastomeric bearing (10, 100) according to one of the preceding claims, **characterized in that** the elastomeric body (14) is formed in one piece.

9. Assembly comprising an elastomeric bearing (10, 100) according to one of claims 1 to 8 and a retaining device (12, 52) for the elastomeric bearing (10, 100) according to one of claims 1 to 8.

10. Assembly according to claim 9, **characterized in that** the retaining device (12, 52) has at least one annular opening (44) for receiving the elastomeric bearing (10, 100).

## Revendications

1. Palier élastomère (10, 100) pour une suspension d'échappement comprenant un corps élastomère (14) ayant une zone de réception (16) pour un appareil de retenue (12) et une ouverture (18) pour supporter un crochet d'échappement (20), ledit corps élastomère (14) ayant un moyen d'encliquetage (22) au niveau de ladite zone de réception (16) pour fixer ledit appareil de retenue (12) audit corps élastmère (14), ledit corps élastomère (14) comprenant une partie intérieure cylindrique creuse (28), une partie extérieure cylindrique creuse (30), et une partie de connexion (32) ayant une première zone de connexion (38) et une seconde zone de connexion (40), la partie intérieure (28) étant disposée radialement vers l'intérieur de la partie extérieure (30), la première zone de connexion (38) étant connectée à la partie intérieure (28) et la seconde zone de connexion (40) étant connectée à la partie extérieure (30), **caractérisé en ce que** la partie de connexion (32) est en forme de U.

2. Palier élastomère (10, 100) selon la revendication 1, **caractérisé en ce que** le moyen d'encliquetage (22) comprend une première lèvre d'encliquetage (24) et une seconde lèvre d'encliquetage (26) espacée de celle-ci, qui sont faites d'un matériau élastomère et s'étendent radialement vers l'extérieur.

3. Palier élastomère (10, 100) selon la revendication 1 ou 2, **caractérisé en ce que** la partie intérieure (28) a une première saillie (34) à son extrémité faisant face à la partie de connexion (32).

4. Palier en élastomère (10, 100) selon l'une des revendications précédentes, **caractérisé en ce que** la partie intérieure (28) présente un évidement (36) sur le côté radialement extérieur à son extrémité opposée à la partie de connexion (32).

5. Palier en élastomère (10, 100) selon l'une des revendications précédentes, **caractérisé en ce que** la première zone de connexion (38) s'effile vers la partie intérieure (28) par rapport à la deuxième zone de connexion (40).

6. Palier élastomère (10, 100) selon la revendication 2 ou l'une des revendications précédentes en combinaison avec la revendication 2, **caractérisé en ce que** la première lèvre d'encliquetage (24) comprend une seconde saillie (42) s'étendant radialement vers l'extérieur.

7. Palier élastomère (10, 100) selon l'une quelconque des revendications précédentes, **caractérisé en ce que** la partie de connexion (32) présente une section transversale biseautée radialement sur un côté opposé axialement à la partie intérieure (28) et à la partie extérieure (30).

8. Palier en élastomère (10, 100) selon l'une des revendications précédentes, **caractérisé en ce que** le corps en élastomère (14) est formé d'une seule pièce.

9. Ensemble comprenant un palier en élastomère (10, 100) selon l'une quelconque des revendications 1 à 8, et un moyen de retenue (12, 52) du palier élastomère (10, 100) selon l'une quelconque des revendications 1 à 8.

10. Ensemble selon la revendication 9, **caractérisé en ce que** le moyen de retenue (12, 52) comprend au moins une ouverture annulaire (44) pour recevoir le palier élastomère (10, 100).
